Europäisches Patentamt

(19) **European Patent Office**

Office européen des brevets

(11) Numéro de publication: **0 036 807 B1**

(12) **FASCICULE DE BREVET EUROPEEN**

(45) Date de publication du fascicule du brevet:
08.08.84

(21) Numéro de dépôt: **81400407.3**

(22) Date de dépôt: **17.03.81**

(51) Int. Cl.³: **H 04 L 11/00**

(54) Concentrateur de système de communication pour relier plusieurs terminaux asynchrones de téléinformatique.

(30) Priorité: **20.03.80 FR 8006774**

(43) Date de publication de la demande:
**30.09.81 Bulletin 81/39**

(45) Mention de la délivrance du brevet:
**08.08.84 Bulletin 84/32**

(84) Etats contractants désignés:
**DE FR GB IT NL**

(56) Documents cités:
**DE - A - 2 205 260**
**FR - A - 2 277 487**
**FR - A - 2 331 221**

**MICROCUMPUTER ARCHITECTURES, third EUROMICRO symposium on microprocessing and microprogramming, 3-6 octobre 1977 North-Holland publishing company Amsterdam, NL H. LAYEC et al.: "Microprocessors and packet switching networks", pages 94-101**

(73) Titulaire: **Etablissement Public de Diffusion dit "Télédiffusion de France", 21-27 rue Barbès, F-92120 Montrouge (FR)**
Titulaire: **Renoulin, Roger Jean, 29, Rue René Jean Mailleux, Thorigné-sur-Vilaine F-35510 Cesson (FR)**
Titulaire: **Le Brun, Jean Yves, 34, Boulevard Clémenceau, F-35100 Rennes (FR)**

(72) Inventeur: **Renoulin, Roger, 29, rue Jean Mailleux, Thorigné/Vilaine F-35510 Cesson (FR)**
Inventeur: **Le Brun, Jean Yves, 34, Boulevard Clémenceau, F-35000 Rennes (FR)**

(74) Mandataire: **Le Guen, Louis François, 13, rue Emile Bara BP 91, F-35802 Dinard Cedex (FR)**

BUNDESDRUCKEREI BERLIN

## Description

La présente invention concerne un concentrateur de système de communication destiné à relier plusieurs terminaux asynchrones de téléinformatique à vitesses de fonctionnements différentes à un réseau de communication et de commutation à grande vitesse.

Plus particulièrement, l'invention concerne un tel concentrateur utilisant comme moyen de liaison avec les terminaux une seule paire ou deux paires téléphoniques. Le nombre de terminaux raccordables peut atteindre une valeur plus élevée que celle que permettrait de débit cumulé des terminaux s'ils étaient actifs simultanément. A cet, effet, on utilise dans le concentrateur une fonction de signalisation ou de veille pour surveiller l'état de chacun des terminaux. Cette fonction, qui caractérise le repos ou l'activité des terminaux, est basée sur l'exploration à vitesse réduite des terminaux au repos, sur la détection de leur changement d'état et sur l'allocation, en partage de temps, de la ressource de transmission du concentrateur entre les terminaux actifs en fonction de leurs besions. Le partage de temps de la resource de transmission est adaptatif.

Le concentrateur de l'invention comprend une unité de commande centrale, associé à un microprocesseur, et des circuits d'accès secondaires, chacun associé à un terminal, reliés à l'unité de commande centrale par une ligne téléphonique, l'unité de commande centrale étant reliée à une liaison à grande vitesse vers le centre de communication et de commutation à grande vitesse par des commutateurs de voies virtuelles et des coupleurs, le microprocesseur étant capable d'effecteur des commutations de voies virtuelles. Une caractéristique de ce concentrateur est définie dans la partie caractérisante de la revendication principale.

Dans le cas où, entre l'unité de commande centrale et les circuits d'accès secondaires, est prévue une paire de lignes, avec une ligne aller et une ligne retour, la caractéristique du concentrateur de l'invention est définie dans la revendication 2.

Les caractéristiques de l'invention mentionnées ci-dessus apparaîtront plus clairement à la lecture de la description suivante d'exemples de réalisation, ladite description étant faite en relation avec les dessins joints, parmi lesquels:

la fig. 1 est un bloc-diagramme schématique d'une première variante de concentrateur suivant l'invention,

la fig. 2 est un bloc-diagramme d'une unité de commande centrale du concentrateur de la fig. 1,

la fig. 3 est un bloc-diagramme des moyens de commutation d'une unité de commande centrale,

la fig. 4 est un bloc-diagramme d'un circuit d'accès secondaire de la fig. 1,

la fig. 5 est un diagramme temporel illustrant une première variante de fonctionnement du concentrateur de la fig. 1,

la fig. 6 est un bloc-diagramme des circuits de commutation utilisés dans une seconde variante de fonctionnement du concentrateur de la fig. 1, et

la fig. 7 est un diagramme temporel illustrant la seconde variante de fonctionnement du concentrateur de la fig. 1.

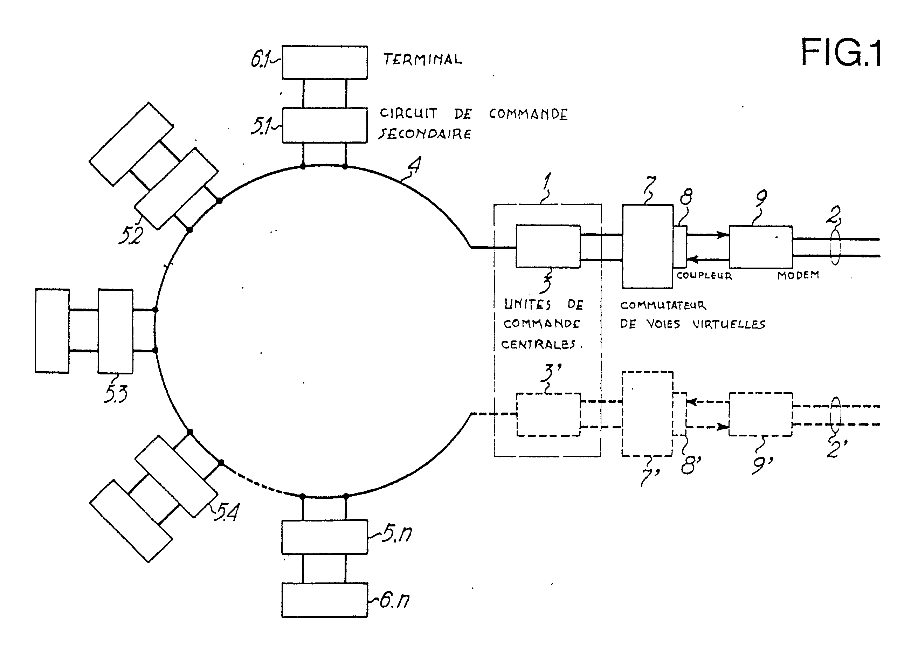

La fig. 1 représente un concentrateur de système de communication 1 relié par des liaisons à grande vitesse 2 et 2' à un réseau de communication et de commutation haute vitesse, non montré. Le concentrateur 1 comprend deux unités de commande centrales 3 et 3' respectivement reliées aux deux extrémités d'un câble 4. Sur le câble 4, sont branchés en parallèle une pluralité de circuits d'accès 5.1 à 5.n. Chaque circuit 5.1 à 5.n est relié à un terminal 6.1 à 6.n.

Par ailleurs, les unités de commande 3 et 3' sont respectivement reliées à des commutateurs de voies virtuelles 7 et 7', lesquels sont respectivement reliés aux liaisons 2 et 2' par des coupleurs 8 et 8' et des modems 9 et 9'.

La structure en boucle du concentrateur, avec les deux unités 3 et 3' permet, en cas de coupure accidentelle du câble 4, ou de défaillance de l'une unités 3 ou 3', de maintenir l'accès possible vers tous les circuits d'accès 5.1 à 5.n qui peuvent être pris en compte par l'une ou l'autre des unités, la relève entre les deux unités se faisant suivant un protocole. Les commutateurs de voies virtuelles 7 et 7' peuvent être des équipements classiques, tels que ceux qui sont décrits dans le brevet EP-A-0 021 917 pour un »Concentrateur téléinformatique pour réseau de transmission et de commutation de données par paquets«. Ils permettent l'accès du concentrateur 1 au réseau de communication haute vitesse, non montré. Les coupleurs 8, 8' et les modems 9, 9' sont supposés classiques et peuvent répondre aux normes de transmission X25. Les commutateurs 7 et 7' sont, en outre, liés entre eux pour assurer, en cas de besoin, le protocole de relève entre les unités 3 et 3'.

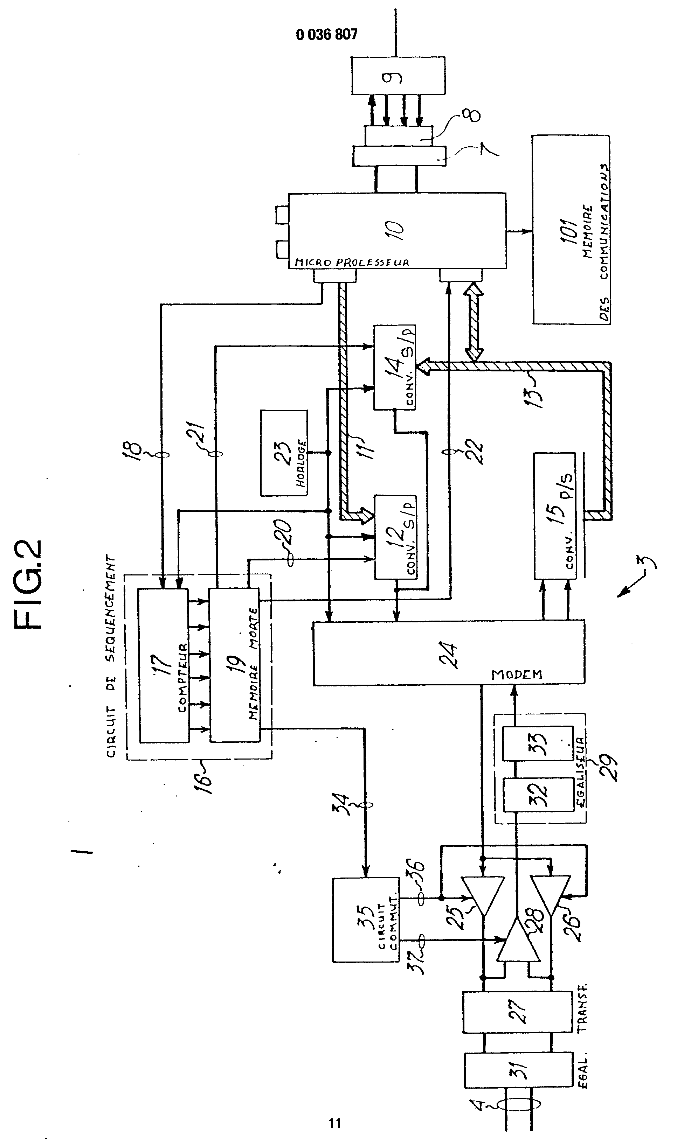

La fig. 2 montre le bloc-diagramme d'une unité de commande centrale 3 ou 3'. Elle comprend un processeur 10 capable d'effecteur des commutations de voies virtuelles et d'assurer, associé à un logiciel approprié et une mémoire des communications 101, la mise en communication des terminaux 5.1 à 5. n avec des terminaux raccordés au réseau de communication relié à la liaison synchrone à grande vitesse 2 ou 2'. Dans l'unité de commande, le processeur 10 est relié par un bus 11 à un convertisseur parallèle-série 12 et, par un bus de données 13, d'une part, à l'entrée parallèle d'un convertisseur parallèle-série 14 et, d'autre part, à la sortie parallèle d'un convertisseur série-parallèle 15. L'unité de commande comprend encore un circuit de séquencement 16 qui est formé d'un compteur de séquencement 17 dont l'entrée d'initialisation est reliee, par le fil 18, à une sortie du processeur 10, et d'une mémoire morte de séquencement 19 dont les entrées d'adressage sont reliées aux sorties du compteur 17. La mémoire morte 19 a deux sorties respectivement reliées aux convertisseurs 12 et 14, par les fils 20 et 21, et une sortie reliée au processeur 10, par un fil 22. Un générateur d'horloge 23 est également prévu, qui distribue les signaux d'horloge aux circuits 12, 14, et 17. Les sorties des convertisseurs 12 et 14 sont reliées à l'entrée de données d'un modem 24, dont l'entrée d'horloge d'émission est reliée au générateur 23. La sortie de données du modem 24 est reliée à l'entrée série de données du convertisseur 15 et la sortie d'horloge de réception du modem 24 est reliée à l'entrée d'horloge du convertisseur 15. La sortie de signal modulé du modem 24 est reliée, par un amplificateur 25 et un amplificateur 25 aux deux bornes, côté unité, d'un transformateur d'isolement 27 qui assure l'isolement galvanique par un fonctionnement »flottant«. Les deux bornes, côté unité, du transformateur 27 sont également reliées aux bornes d'entrée d'un amplificateur différentiel 28 dont la sortie est reliée, à travers un égaliseur 29, à l'entrée de signal modulé du modem 24. Les bornes, côté ligne, du transformateur 27 sont respectivement reliées aux deux fils de la ligne 4, dans le cas où ce câble est constitué par une simple ligne à deux fils. La mémoire des communications 101 permet avec le microprocesseur 10 d'adapter les rythmes d'interrogation des terminaux, individuellement selon leurs états.

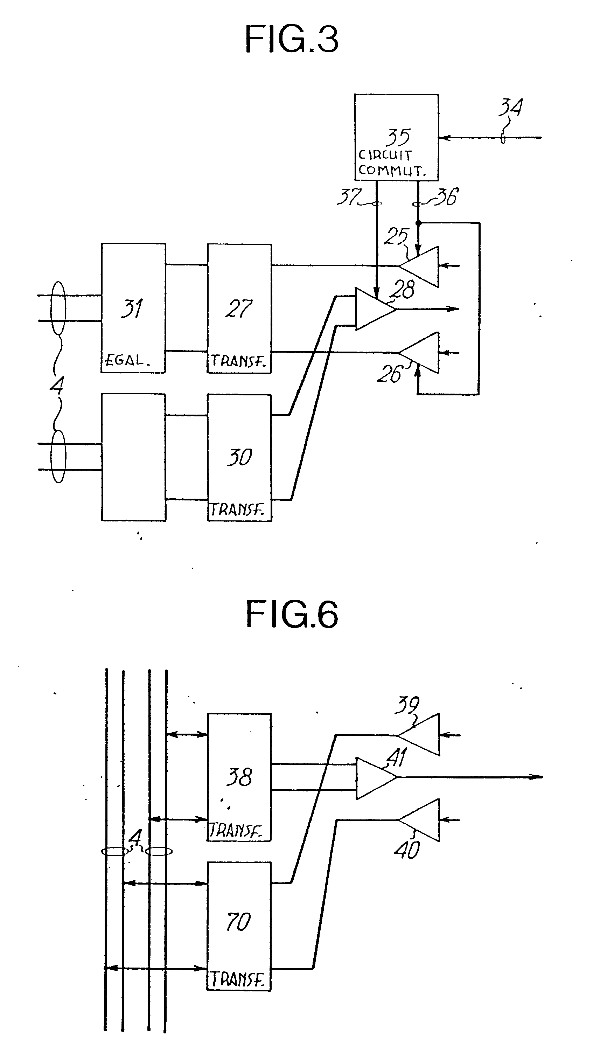

A la fig. 3, on a montré une variante de branchement quand on utilise un câble 4 à quatre fils. Les entrées de l'amplificateur différentiel 28 sont alors reliées aux bornes, côté unité, d'un second transformateur d'isolement 30 dont les bornes, côté ligne, sont reliées à la deuxième paire du câble 4.

Des dispositifs adaptateurs d'impédance permettent notamment dans le cas d'une liaison deux-fils, montré à la fig. 2, utilisée en alternat, de connecter les amplificateurs 25 et 26 à basse impédance pour émettre suffisamment de puissance pour attaquer la ligne, quand l'unité de commande émet, ou à haute impédance, quand l'unité de commande reçoit.

L'horloge 23 scande les temps du compteurs de séquencement 17 qui adresse la mémoire 19, laquelle distribue les instructions d'un programme approprié aux circuits 10, 12 et 14.

Des adaptateurs d'impédance 31 sont prévus aux extrémités du câble 4 pour éviter les réflexions des signaux et, plus particulièrement, des impulsions brèves utilisées en mode »bande de base«.

L'égaliseur 29 comprend un dispositif égaliseur de ligne proprement dit 33 précédé d'un dispositif de correction automatique de gain 32. Les dispositifs 33 sont nécessaires quand la ligne 4 est très longue, plus de quelques kilomètres, de façon à assurer, quelle que soit la distance d'un circuit d'accès 5.1 à 5.n, un niveau correct à la réception. Le dispositif 32 sert à corriger l'affaiblissement croissant de la ligne aux composantes à hautes fréquences des impulsions biphases différentielles des signaux en bande de base.

Une sortie de la mémoire 19 est reliée, par un fil 34, à l'entrée de commande d'un circuit de commutation de sens de transmission 35. Une sortie 36 du circuit 35 est reliée aux entrées de commande d'impédance des amplificateurs 25 et 26 tandis q'une autre sortie 37 est reliée à l'entrée de commande d'impédance de l'amplificateur différentiel 28.

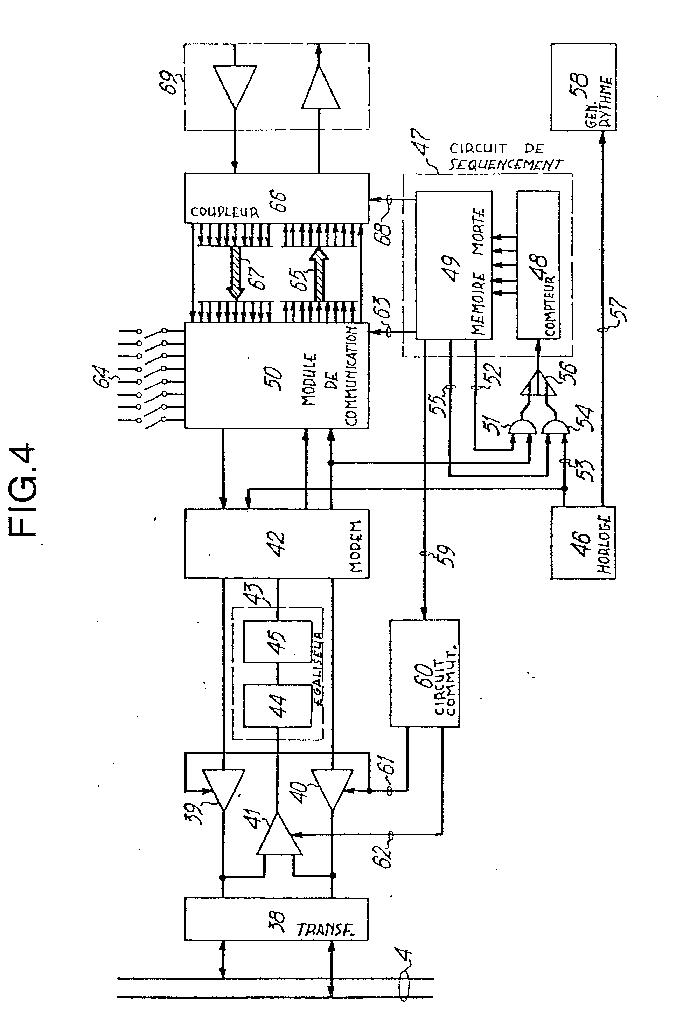

La fig. 4 montre le bloc-diagramme d'un circuit d'accès secondaire 5.1 à 5.n. Il comprend, comme une unité de commande 3 ou 3', un transformateur d'isolement 38 dont les bornes, côté ligne, sont reliées aux fils de la ligne à deux fils 4 et dont les bornes, côté circuit d'accès, sont reliées, d'une part, respectivement aux sorties de deux amplificateurs 39 et 40, et, d'autre part, respectivement aux deux entrées d'un amplificateur différentiel 41. Les entrées des amplificateurs 39 et 40 sont reliées, en parallèle, à la sortie de signal modulé d'un modem 42 fontionnant en »bande de base«. La sortie de l'amplificateur 41 est reliée à l'entrée de signal modulé du modem 42, par l'intermédiaire d'un égalisateur 43, comprenant un dispositif de contrôle automatique de gain 44 est un dispositif égaliseur proprement dit 45.

Le circuit d'accès comprend encore une horloge locale 46 et un circuit de séquencement 47. Le circuit ce séquencement 47 comprend un compteur de séquencement 48 et une mémoire morte de séquencement 49. La sortie de signal démodulé du modem 42 est reliée à l'entrée de données reçues d'un module de communication 50 tandis que l'entrée de signal modulant de modem 42 est reliée à la sortie des données à émettre du module 50.

La sortie d'horloge de réception du modem 42 est reliée à la première entrée d'une porte ET 51 dont la seconde entrée est reliée au fil de sortie 52 de la mémoire 49. Une sortie 53 de l'horloge locale 46 est reliée à une première entrée d'une porte ET 54 dont la seconde entrée est reliée par un fil 55 à une sortie de la mémoire 49. Les sorties des portes 51 et 54 sont respectivement reliées aux entrées d'une porte OU 56 dont la sortie est reliée à l'entrée d'horloge du compteur 48. Une sortie 57 de l'horloge locale 46 est reliée à l'entrée d'horloge d'un générateur de rythme asynchrone 58.

Une sortie 59 de la mémoire 49 est reliée à l'entrée de commande d'un circuit de commutation de sens de transmission 60. Une sortie 61 du circuit 60 est reliée aux entrées de commande d'impédance amplificateurs 39 et 40 tandis qu'une autre sortie 62 de 60 est reliée à l'entrée de commande d'impédance de l'amplificateur différentiel 41. Une sortie 63 de la mémoire 49 est reliée au module de communication 50. Des sorties du module 50 sont reliées à jeu de contacts 64 permettant par leur fermetures sélectives prédéterminées de matérialiser l'adresse du circuit d'accès sencondaire. Le nombre des contacts du jeu de contacts 64 est égal à huit de manière à pouvoir former un mot d'adresse de huit éléments binaires. Le module de communication comporte une sortie parallèle reliée par une liaison 65 aux entrées parallèles d'un coupleur asynchrone 66, ainsi que des entrées parallèles reliées par une liaison 67 au coupleur 66. L'entrée d'horloge du coupleur 66 est reliée par 68 à la mémoire 49. Côté terminal, le coupleur asynchrone 66 a une sortie reliée à travers une jonction informatique 69 à l'entrée du terminal 6.1 à 6.n associé et une entrée reliée, toujours à travers la jonction 69, au même terminal. La jonction 69 est de préférence une jonction informatique du type V24.

Dans les deux premiers exemples de réalisation décrits, on suppose que les unités 3 et 3' et les circuits d'accès 5.1 à 5.n utilisent des modulateurs-démodulateurs à bande de base à codage biphase différentiel. Dans le cas de transmission assez longues, de 10 km et plus, et dans le cas de débits élevés, au moins 19 200 bauds, on complète ces modems par des égalisateurs de ligne pour corriger l'affaiblissement, lequel croît avec la fréquence des composants du signal. Ils peuvent également être complétés par des correcteurs automatiques de gain pour compenser les différences de niveau introduites par les distances entre les unités 3 et 3', d'une part, et les circuits d'accès 5.1 à 5.n, d'autre part.

Dans la suite, on va supposer qu'une seule unite de commande centrale est en service et interroge les circuits d'accès secondaires 5.1 à 5.n.

Dans un premier exemple de réalisation, on suppose que le câble 4 est constitué par une ligne à deux fils permettant une liaison en alternat.

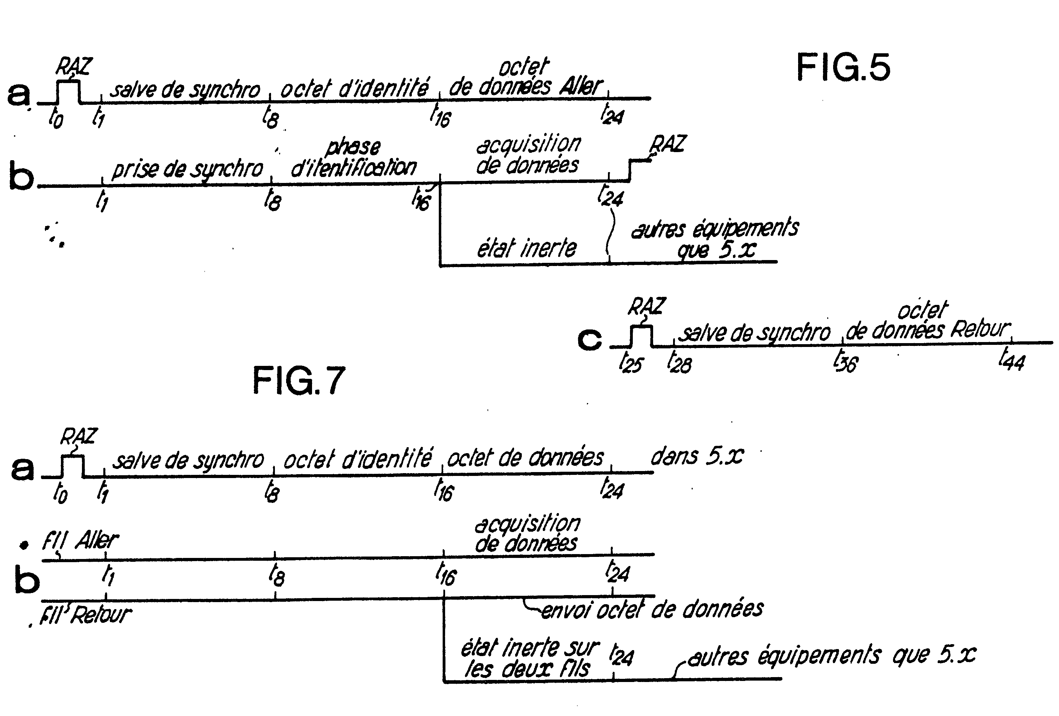

Les diagrammes des fig. 5a à 5c illustrent le fonctionnement dans le cas d'un appel de l'unité 3 vers le circuit d'accès 5.x, sur une ligne à deux fils. Entre chaque salve de transmission à destination d'un terminal, l'unité 3 effectue une coupure de la porteuse sur la ligne 4 de façon que tous les démodulateurs des circuits d'accès 5.1 à 5.n connectés puissent se resynchroniser à chaque salve. C'est le signal de remise à ze, ro RAZ de la fig. 5a.

A un temps t1, postérieur au signal RAZ, l'unité 3 émet une salve de synchronisation constituée par un octet de structure connue, telle que »10101010«. Cette prise de synchronisation est de première importance pour la suite de la séquence et est rendue possible par une caractéristique liée au type de modulation des modems utilisés en ce qui concerne la détection de porteuse qui fournit, au temps élémentaire près, l'information.

Puis au temps t8, toujours à la fig. 5a, l'unité 3 émet un octet d'identité du circuit d'accès interrogé, c'est à dire l'adresse du circuit d'accès interrogé. Avec un octet, soit huit éléments binaires, on peut obtenir $2^8 = 256$ adresses différentes ou $2^7 = 128$ adresses différentes, si un élément binaire est réservé pour un contrôle de parité.

Puis au temps t16, l'unité 3 transmet sur la ligne 4, l'octet de données destiné au circuit d'accès 5.x interrogé, l'octet de données aller se terminant au temps t24.

Dans les circuits d'accès 5.1 à 5.n reliés à la ligne 5, dès que la prise de synchronisation est effectuée entre t1 et t8, il y a changement d'état avec passage de la phase de repos à la phase d'identification, comme le montre la fig. 5b. En phase d'identification, le module de communication 50 effectue une comparaison série, élément bonaire à élément binaire, de l'adresse reçue de l'unité 3 à une identité emmagasinée dans le jeu de contacts 64 du circuit d'accès. Donc, au temps t16, seul le circuit d'accès 5.x a obtenu une comparaison positive, les autres circuits d'accès ayant constaté des comparaisons négatives entre t9 et t16. La branche inférieure de la fig. 5b indique l'état inerte des circuits d'accès non interrogés, après le temps t16, tandis que la branche supérieure de la fig. 5b indique que, dans le circuit d'accès 5.x, il y a passage en phase d'acquisition de données utiles.

La phase d'acquisition de l'octet de données dure, comme la phase d'identification, huit temps élémentaires. Au temps t24, à la fin de l'acquisition de l'octet de données utiles, le circuit d'accès 5.x passe en phase de transfert de l'octet au coupleur asynchrone 66 chargé de véhiculer les données en mode asynchrone vers le terminal 6.x.

A noter que l'octet de données transmis par l'unité de commande peut être soit un octet de données utiles, soit un octet ou caractère de bourrage FF.

La phase d'acquisition de l'octet de données étant terminée, le circuit d'accès peut prendre l'un des trois états possibles:

— soit déclencher la procédure de transmission d'un octet de données utiles vers l'unité de commande, cet octet retour étant alors présent à la sortie du coupleur asynchrone reliée à la liaison 67;

— soit déclencher la procédure de transmission d'un octet retour de bourrage, si le terminal 6.x est hors tension; ce cas pouvant, par exemple, être illustré par une boucle d'abonné fermée dans le cas du téléphone;

— soit déclancher la transmission d'un octet ou caractère de silence FE, si le terminal est sous tension, mais en période de silence.

Pendant cette phase de traitement de l'octet à transmettre par l'unité de commande, la module de communication 50 transmet l'octet reçu, s'il s'agit de données utiles, au terminal 6.x, en série à traversle coupleur asynchrone 66, via la liaison 65. A noter que les octets de bourrage sont exclus du code des données, ce qui n'est pas gênant dans le cas des terminaux asynchrone dont la syntaxe utile est généralement limitée à 128 codes utiles parmi 256.

Pendant la réception du message émis par l'unité de commande, le circuit de séquencement est actionné par le signal d'horloge de réception restitué par le modem 42 qui transmet ce signal d'horloge au compteur de séquencement (48) par les portes 51 et 56, la porte 51 étant activée par la mémoire 40, via le fil 52. Après la fin de la phase d'acquisition de l'octet de don- nées, la mémoire 49 active la porte 54, via le fil 55, si bien que les signaux de l'horloge locale 46 sont transmis, d'une part, au compteur de séquencement 48, par 54 et 56, et, d'autre part, au modem 42 pour servir d'horloge d'émission retour. En pratique, un temps mort est prévu dans le programme de la mémoire 49 entre la fin de l'activation du fil 52 et l'activation du fil 55. Pendant ce temps mort ou temps de garde, la ligne 4 est entièrement libre, car dès la fin de l'émission de l'octet utile aller par l'unité de commande, celle- ci cesse de transmettre la porteuse sur la ligne, comme le commande sa mémoire de séquencement 19.

Dès que le fil 55 est activé, la modem 42 émet sur la ligne 4 une salve de synchronisation vers l'unité de commande ce qui permet au modem 24 de restituer l'horloge retour. L'émission retour est illustrée à la fig. 5c, le diagramme des temps indiquant après le temps t24, un intervalle de temps de garde avec retour à zéro de la ligne qui dure jusqu'au temps t28, puis l'intervalle de temps t28 à t36 pendant lequel la salve de synchronisation retour est émise, et enfin l'intervalle de temps t36 à t44 pendant lequel l'octet de données retour est émis. On rappelle que cet de données retour peut contenir des données utiles, un caractère de bourrage FF ou un caractère de silence FE.

En fin de séquence, après réception dans l'unité de commande 3 ou 3' de l'octet de données retour, lequel est présent dans le convertisseur série-parallèle 15, le processeur 10 est alerté de cette situation. Il discrimine alors les caractères de donnés utiles des caractères de bourrage ou de signalisation, avant de procéder à l'assemblage des paquets de données et à une commutation de voies virtuelles vers le réseau haute vitesse.

A noter encore que, dans l'unité de commande, dès la transmission de l'octet de données aller, la mémoire 19 fait changer l'état de la bascule 35 si bien que les amplificateurs 25 et 26 sont commutés en haute impédance et que l'amplificateur différentiel 28 est activé. Par ailleurs, dans le circuit d'accès 5.x, dès la fin de l'acquisition de l'octet aller, la mémoire 49 fait changer l'état de la bascule 60 qui fait passer les amplificateurs 39 et 40 en état de basse impédance et met l'amplificateur 41 au repos.

A noter encore que, dans les circuits d'accès 5.1 à 5.n, autres que le circuit d'accès 5.x, dès la fin de la phase d'identification, qui est pour eux négative, les amplificateurs 39 à 41 sont commutés à très haute impédance pour obtenir une occultation pendant un temps couvrant l'intervalle t16 à t44, au moins. Pour cela, l'identification négative pour effet de commuter l'activation des fils 52 et 55, si bien que le compteur 48 reçoit l'horloge locale pour faire avancer le programme de la mémoire 49 qui commande le circuit 60. Ainsi, pendant la transmission retour, on évite de recevoir des éléments binaires parasites des circuits d'accès non interrogés par l'unité de com- mande.

Le circuit d'accès, montré à la fig. 4 et prévu pour fonctionner avec une ligne à deux fils, peut être adapté pour fonctionner avec une ligne à quatre fils comme le montre la fig. 6. Le transformateur d'isolement 38 monté sur la paire aller de la ligne quatre-fils est doublé par un transformateur d'isolement 70 monté sur la paire retour. L'amplificateur 41 reste associé au transformateur 38 tandis que les amplificateurs 39 et 40 sont associés au transformateur 70. Le circuit 60 est supprimé ainsi que l'horloge locale 46 et l'ensemble des portes 51, 54 et 56, car le modem 42 reçoit le signal d'horloge en permanence de la paire aller et peut donc appliquer directement ces signaux d'horloge au compteur 48.

Les fig. 7a et 7b illustrent la séquence d'échange bilatéral entre une unité de commande 3 ou 3' et un circuit d'accès 5.x, dans le cas d'une utilisation d'une ligne quatre-fils. La phase d'émission de l'unité de commande vers les circuits d'accès est montrée à la fig. 7a. On constate qu'elle est la même que celle de la fig. 5a, dans le cas d'une ligne deux-fils, c'est à dire qu'elle comprend un temps de remise à zéro des circuits d'accès par suppression de la porteuse sur la paire aller, soit au temps t0, puis de t1 à t8, l'émission d'une salve de synchronisation, puis de t9 à t16, l'émission de l'adresse du circuit d'accès 5.x interrogé et, enfin, de t17 à t24, l'émission de l'octet de données. Après cette phase, l'unité de commande continue à émettre la porteuse sur la paire aller.

La phase correspondante de fonctionnement du circuit d'accès 5.x est montrée à la fig. 7b. En t0 le circuit d'accès est au repos, entre t1 et t8, il se synchronise sur la salve, en t16, il a reconnu son adresse et, donc, entre t17 et t24, il peut envoyer sur la paire retour l'octet de données qu'il a à transmettre à l'unité de commande. Il en résulte une économie de temps, par rapport au fonctionnement dans le cas d'une ligne deux-fils, laquelle est égale au temps de retournement des modems au temps mort mentionné plus haut, plus la durée de la salve de synchronisation retour.

Par ailleurs, entre les temps t9 et t16, les circuits d'accès autres que 5.x s'isolent de la paire aller et de la paire retour, pendant un intervalle de temps couvrant largement t24.

Le mode de fonctionnement avec une ligne quatre-fils permet évidement l'insertion de répéteurs régénérateurs sur chaque sens de transmission ce qui permet de constituer des boucles plus longues et plus rapides, ce qui est notamment très important quand on désire atteindre des débits de 2 Mbit/s. En pratique, dans ce cas, le prix de la paire supplémentaire se trouve à peu près compensé par le rendement et le débit de la boucle qui sont presque doublés.

## Revendications

1. Concentrateur de système de communication destiné à relier plusieurs terminaux asynchrones de téléinformatique à vitesses de fonctionnements différentes à un réseau de communication et de commutation à grande vitesse comprenant une unité de commande centrale (3, 3'), associée à microprocesseur (10), et des circuits d'accès secondaires (5.1 à 5.n), chacun associé à un terminal, reliés à l'unité de commande centrale par une ligne téléphonique (4), l'unité de commande centrale (3, 3') étant reliée à une liaison à grande vitesse (2, 2') vers le centre de communication et de commutation à grande vitesse par des commutateurs de voies virtuelles (7) et des coupleurs (8), le microprocesseur (10) étant capable d'effectuer des commutations de voies virtuelles, caractérisé en ce que l'unité de commande centrale (3, 3') comprend des moyens de commutation centraux (35) puvant prendre deux tats possibles, un état émission ou un état réception, chaque circuit d'accès secondaire (5.1 à 5.n) comprenant des moyens de commutation secondaires (60) puvant également prendre deux états possibles, un état réception ou un état émission, l'unité de commande centrale et les circuits d'accès secondaires comprenant des moyens d'émission de salve de synchronisation (14, 42), des moyens d'émission (12, 50) et de réception (15, 50) d'octets d'information un par un, l'unité de commande centrale comprenant de plus des moyens d'adressage compris dans le microprocesseur (10) pour émettre un octet d'adresse sélective du circuit d'accès secondaire à interroger, chaque circuit d'accès secondaire (5.1 à 5.n) comprenant un circuit de reconnaissance d'adresse (64), l'unité de commande centrale comprenant un séquenceur central (16) commutant à chaque début de séquence d'interrogation les moyens de commutation centraux (35) à l'état d'émission, puis couplant les moyens d'émission de salve de synchronisation (14) à la ligne (4), puis les moyens d'adressage, puis les moyens d'émission d'octets, puis commutant les moyens de commutation centraux (35) à l'état de réception et couplant les moyens de détection de synchronisation (24) à la ligne (4), chaque circuit d'accès secondaire (5.1 à 5.n) comprenant un séquenceur secondaire (47) commutant entre deux séquences d'interrogation loes moyens de commutation secondaires (60) à l'état de réception, couplant les moyens de détection de synchronisation (42) à la ligne (4) par l'intermédiaire desdits moyens de commutation secondaires (60), puis, en réponse à la salve de synchronisation, les moyens de détection de synchronisation (42) actionnant le séquenceur secondaire (47) pour coupler le circuit de reconnaissance d'adresse (64) à la ligne, qui, si la réponse est négative, provoque l'isolement desdits moyens de commutation (60) de la ligne et, si la reconnaissance est positive, actionne le séquenceur secondaire (47) pour coupler les moyens de réception d'octet (66) à la ligne (4),

puis le séquenceur secondaire (47) commutant les moyens de commutation secondaires (60) à l'état d'émission et couplant les moyens d'émission de salve de synchronisation (50) à la ligne (4), puis ses moyens d'émission d'octet (66), puis commutant les moyens de commutation secondaires (60) à l'état de réception, les moyens de détection de synchronisation (24) de l'unité de commande centrale couplant les moyens de réception d'octet (15, 10) à la ligne (4) en réponse à la réception de la salve de synchronisation du circuit d'accès secondaire interrogé.

2. Concentrateur suivant la revendication 1, caractérisé en ce qu'entre l'unité de commande centrale et les circuits d'accès secondaires est prévue une paire de lignes (4), avec une ligne aller et une ligne retour, les circuits d'accès secondaires ne comprenant plus de moyens d'émission de salve de synchronisation, et les moyens de commutation étant supprimés dans l'unité de commande centrale et les circuits d'accès secondaires, dans chaque circuit d'accès secondaire, les moyens de détection de synchronisation (42) actionnant le séquenceur secondaire (47) pour coupler le circuit de reconnaissance d'adresse (64) à la ligne (4), qui, si la réponse est positive, actionne le séquenceur secondaire (47) pour coupler ses moyens d'émission d'octet (66) à la ligne.

## Patentansprüche

1. Konzentrator für Kommunikationssystem zum Anschließen mehrerer asynchroner Telematik-Terminals, die mit unterschiedlichen Geschwindigkeiten auf ein Hochgeschwindigkeits-Kommunikations- und Schaltnetzwerk arbeiten, das eine zentrale Steuereinheit (3, 3') aufweist, die einem Mikroprozessor (10) und sekundären Zugriffskreisen (5.1 — 5.n) zugeordnet ist, von denen jeder mit einem Terminal versehen ist, das über eine Telefonleitung (4) mit der zentralen Steuereinheit verbunden ist, welche zentrale Steuereinheit (3, 3') über eine Hochgeschwindigkeitsleitung (2, 2') mit dem Hochgeschwindigkeits-Kommunikations- und Schaltnetzwerk durch virtuelle Linienschalter (7) und Koppler (8) verbunden ist, wobei der Mikroprozessor (10) virtuelle Linienschaltoperationen ausführen kann, dadurch gekennzeichnet, daß die zentrale Steuereinheit (3, 3') zentrale Schalteinrichtungen (35) besitzt, die zwei mögliche Zustände haben kann, einen Sendezustand oder einen Empfangszustand, daß jeder sekundäre Zugriffskreis (5.1 — 5.n) sekundäre Schalteinrichtungen (60) aufweist, die ebenfalls zwei mögliche Zustände haben können, einen Empfangszustand oder einen Sendezustand, daß die zentrale Steuereinheit und die sekundären Zugriffskreise Synchronisations Impuls Sendeeinrichtungen (14, 42) haben, Einrichtungen zum Senden (12, 50) und zum Empfangen (15, 50) von Daten Bytes, eines um andere, daß die zentrale Steuereinheit ferner Adressiereinrichtungen aufweist, die im Mikro

prozessor (10) enthalten sind, um ein Adressen-Byte abzugeben, das den sekundären Zugriffskreis auswählt, der abzufragen ist, daß jeder sekundäre Zugriffskreis (5.1—5.n) eine Adressen-Erkennungsschaltung (64) aufweist, daß die zentrale Steuereinheit eine zentrale Folgeschaltung (16) aufweist, um die zentralen Schalteinrichtungen (35) am Beginn jeder Abfragefolge in den Sendezustand zu schalten, daß dann die Synchronisationsimpuls-Sendeeinrichtung (14) mit der Leitung (4) gekoppelt wird, dann die Adressierschaltung, dann die Byte-Sendeschaltung, daß dann die zentrale Schalteinrichtung (35) zurück in den Empfangszustand geschaltet wird und die Synchronisationsdetektorschaltung (24) an die Leitung (4) gekoppelt wird, daß jeder sekundäre Zugriffskreis (5.1—5.n) sekundäre Folgeschaltungen (47) aufweist, um die sekundären Schalteinrichtungen (60) zwischen zwei Abfragefolgen in den Empfangszustand zu schalten, daß die Synchronisationsdetektorschaltung (42) mit der Leitung (4) gekoppelt wird mit Hilfe der sekundären Schalteinrichtung (60), daß dann aufgrund des Synchronisationsimpulses die Synchronisationdetektorschaltung (42) die sekundäre Folgeschaltung (47) ansteuert, um die Adressen-Erkennungsschaltung (64) mit der Leitung zu koppeln, die, wenn der Response negativ ist, die Schalteinrichtung (60) von der Leitung trennt und die, wenn der Response positiv ist, die sekundäre Folgeschaltung (47) ansteuert, um die Byte-Empfangsschaltung (66) mit der Leitung (4) zu koppeln, daß dann die sekundäre Folgeschaltung (47) die sekundäre Schalteinrichtung (60) in den Sendezustand schaltet und die Impulssynchronisations-Sendeeinrichtung (50) mit der Leitung (4) koppelt, danach ihren Byte-Sendekreis (66), daß dann die sekundäre Schalteinrichtung (60) zurück in den Empfangszustand geschaltet wird, und daß die Synchronisierungsdetektorschaltung (24) in der zentralen Steuereinheit den Byte-Empfangskreis (15, 10) mit der Leitung (4) koppelt, aufgrund des Empfangs des Synchronisierungsimpulses von dem abgefragten sekundären Zugriffskreis.

2. Konzentrator nach Anspruch 1, dadurch gekennzeichnet, daß zwischen der zentralen Steuereinheit und den sekundären Zugriffskreisen ein Paar von Leitungen (4) vorgesehen ist, mit einer Vorwärtsleitung und einer Rückwärtsleitung, daß die Impulssynchronisierungs-Sendeeinrichtung aus den sekundären Zugriffskreisen entfernt worden sind, daß die Schalteinrichtungen aus der zentralen Steuereinheit und den sekundären Zugriffskreisen entfernt worden sind, daß in jedem sekundären Zugriffskreis die Synchronisierungsdetektorschaltung (42) die sekundäre Folgeschaltung (47) aktiviert, um die Adressen-Erkennungsschaltung (64) mit der Leitung (4) zu koppeln, welche, wenn der Response positiv ist, die sekundäre Folgeschaltung (47) ansteuert, um die Byte-Sendeeinrichtung (66) mit der Leitung zu koppeln.

## Claims

1. A communication system concentrator for connecting several asynchronous data processing terminals operating at various speeds to a high speed communication and switching network comprising a central control unit (3, 3'), associated with a microprocessor (10) and secondary access circuits (5.1—5.n), each being associated with a terminal, connected to the control central unit through a telephone line (4), the central control unit (3, 3') being connected by a high speed link (2, 2') to the high speed communication and switching center by virtual line switches (7) and couplers (8), the microprocessor (10) being able to carry out virtual line switching operations, characterized in that the central control unit (3, 3') has central switching means (35) having two possible conditions, a transmission condition or a reception condition, each secondary access circuit (5.1—5.n) having secondary switching means (60) having also two possible conditions, a reception condition or a transmission condition, the central control unit and the secondary access circuits having synchronization burst transmission means (14, 42) , means for transmitting (12, 50) and for receiving (15, 50) data bytes, one by one, the central control unit also having addressing means included in the microprocessor (10) to transmit an addresse byte selecting the secondary access circuit to be interrogated, each secondary access circuit (5.1—5.n) having an address recognition circuit (64), the central control unit having a central sequencing circuit (16) for switching the central switching means (35) at the beginning of each interrogation sequence to the transmission condition, then coupling the synchronization burst transmission means (14) to the line (4), then the addressing means, then the byte transmission means, then switching the central switching means (35) back to the reception condition and coupling the synchronization detection means (24) to the line (4), each secondary access circuit (5.1—5.n) having secondary sequencing means (47) for switching the secondary switching means (60) to the reception mode between two interrogation sequences, coupling the synchronization detection means (42) to the line (4) by means of said secondary switching means (60), then, responsive to the synchronization burst, the synchronization detection means (42) enabling the secondary sequencing means (47) in order to couple the address identification circuit (64) to the line, which when the response is negative, causes the said switching means (60) to be isolated from the line, and, when the response is positive, enables the secondary sequencing means (47) for coupling the byte receiving means (66) to the line (4), then the secondary sequencing means (47) switching the secondary switching means (60) to the transmission condition and coupling the burst synchronization transmission means (50) to the line (4), then its byte transmission means (66), then switching the secondary switching means (60) back to the reception condition, the synchronization detection means (24) in the central control unit coupling the byte reception means (15, 10) to the line (4) in response to the reception of the synchronization burst from the interrogated secondary access circuit.

2. A concentrator in accordance with claim 1, characterized in that between the central control unit and the secondary access circuits a pair of lines (4) is provided, with one forward line and one backward line, the burst synchronization transmission means having been removed from the secondary access circuits, and the switching means having been removed from the central control unit and the secondary access circuits, in each secondary access circuit, the synchronization detection means (42) activating the secondary sequencing means (47) for coupling the address recognition circuit (64) to the line (4), which, when the response is positive, enables the secondary sequencing means (47) for coupling its byte transmission means (66) to the line.

# FIG.1

TERMINAL

CIRCUIT DE COMMANDE SECONDAIRE

UNITES DE COMMANDE CENTRALES.

COMMUTATEUR DE VOIES VIRTUELLES

COUPLEUR

MODEM

1  2  3'  4  5.1  5.2  5.3  5.4  5.n  6.1  6.n  7'  8  8'  9  9'  2  2'

# FIG.2

CIRCUIT DE SEQUENCEMENT

17 COMPTEUR

19 MEMOIRE MORTE

23 HORLOGE

MICRO PROCESSEUR 10

12 CONV. S/P

14 CONV. S/P

35 CIRCUIT COMMUT.

25

28

26

31 EGAL.

27 TRANSF.

32 33 EGALISEUR 29

24 MODEM

15 CONV. P/S

101 MEMOIRE DES COMMUNICATIONS

9

7

8

0 036 807

# FIG.3

# FIG.6

# FIG.4

## FIG.5

**a** RAZ | salve de synchro | octet d'identité | octet de données Aller
$t_0$ $t_1$ $t_8$ $t_{16}$ $t_{24}$

**b** prise de synchro | phase d'identification | acquisition de données | RAZ
$t_1$ $t_8$ $t_{16}$ $t_{24}$

état inerte | autres équipements que 5.x

**c** RAZ | salve de synchro | octet de données Retour
$t_{25}$ $t_{28}$ $t_{36}$ $t_{44}$

0 036 807

## FIG.7

**a** RAZ | salve de synchro | octet d'identité | octet de données | dans 5.x
$t_0$ $t_1$ $t_8$ $t_{16}$ $t_{24}$

fil Aller

**b** acquisition de données
$t_1$ $t_8$ $t_{16}$ $t_{24}$

fil Retour

envoi octet de données

état inerte sur les deux fils $t_{24}$ | autres équipements que 5.x